(19) Europäisches Patentamt / European Patent Office / Office européen des brevets

(11) **EP 2 915 759 B1**

(12) **EUROPEAN PATENT SPECIFICATION**

(45) Date of publication and mention
of the grant of the patent:
**09.10.2019 Bulletin 2019/41**

(51) Int Cl.:
***B32B 15/08*** (2006.01)   ***B65D 1/00*** (2006.01)
***B65D 1/12*** (2006.01)

(21) Application number: **13851220.7**

(22) Date of filing: **28.08.2013**

(86) International application number:
**PCT/JP2013/072953**

(87) International publication number:
**WO 2014/069082 (08.05.2014 Gazette 2014/19)**

(54) **RESIN COATED METAL PLATE FOR DRAWN AND IRONED CAN, DRAWN AND IRONED CAN, AND DRAWN AND IRONED CAN MANUFACTURING METHOD**

HARZBESCHICHTETE METALLPLATTE FÜR EINE TIEFGEZOGENE UND GEGLÄTTETE DOSE, TIEFGEZOGENE UND GEGLÄTTETE DOSE SOWIE HERSTELLUNGSVERFAHREN FÜR DIE TIEFGEZOGENE UND GEGLÄTTETE DOSE

PLAQUE MÉTALLIQUE REVÊTUE DE RÉSINE POUR BOÎTE DE CONSERVE EMBOUTIE ET ÉTIRÉE, BOÎTE DE CONSERVE EMBOUTIE ET ÉTIRÉE, ET PROCÉDÉ DE FABRICATION DE BOÎTE DE CONSERVE EMBOUTIE ET ÉTIRÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2012 JP 2012239886**

(43) Date of publication of application:
**09.09.2015 Bulletin 2015/37**

(73) Proprietor: **Toyo Kohan Co., Ltd.**
**Tokyo 102-8447 (JP)**

(72) Inventors:
• **TOGO, Hiroaki**
**Kudamatsu-shi**
**Yamaguchi 744-8611 (JP)**
• **SHIMODA, Youichi**
**Kudamatsu-shi**
**Yamaguchi 744-8611 (JP)**

(74) Representative: **Ter Meer Steinmeister & Partner**
**Patentanwälte mbB**
**Artur-Ladebeck-Strasse 51**
**33617 Bielefeld (DE)**

(56) References cited:
**EP-A1- 2 292 425      EP-A1- 2 444 245**
**WO-A1-2010/146755   WO-A1-2011/118160**
**JP-A- 2002 362 528   JP-A- 2005 290 354**
**US-A- 5 094 924**

**Description**

[Technical Field]

The present invention relates to a resin coated metal sheet for using drawn and ironed cans, a drawn and ironed can, and a method of manufacturing a drawn and ironed can.

[Background Art]

Drawn and ironed cans (DI cans) are known as metal-can containers for beverage, which are provided as cans that have seamless sidewalls (seamless cans). In general, drawn and ironed cans are manufactured through a drawing process and an ironing process. In the drawing process, a metal sheet such as aluminum sheet and tin-plated steel sheet is drawn, using dies and punches for drawing, into cups having a cup shape. Each cup comprises a cup-body part that has a seamless sidewall and a cup-bottom part that is integrally and seamlessly connected with the cup-body part. The drawn cup is then ironed in the ironing process using a punch and a die for ironing so that the container-body part has a reduced thickness.

There is also known another type of drawn and ironed cans that are obtained using a resin coated metal sheet configured such that a metal sheet is coated with resin. When such a resin coated metal sheet is drawn and ironed, lubricant such as wax is applied to the resin coated metal sheet, and the drawing and ironing are performed in a dry state. This is in contrast to the drawing and ironing of a metal sheet without resin coating, in which a liquid coolant is used to reduce the friction between the metal sheet and jigs. The resin coated metal sheet thus has an advantage of reducing environmental burdens because the drawing and ironing can be performed in a dry state without using coolant.

When such a method in a dry state is employed to perform the drawing and ironing processes, however, it is necessary for the resin coated metal sheet to withstand severe processing conditions. To this end, Patent Document 1 discloses a coated metal sheet obtained by considering an amount of coating film on the metal sheet surface, a plating condition, a film strength and the like, for example, to smoothly perform the drawing and ironing processes under such dry conditions.

[Prior Art Document]

[Patent Document]

[Patent Document 1] JP 2003-34322 A

[Summary of Invention]

[Problems to be solved by Invention]

Recently, metal-can containers for beverage are strongly demanded to have an appearance with brightness. In such circumstances, even though the above coated metal sheet described in Patent Document 1 employs aluminum as the metal sheet, which can easily develop an appearance with brightness, the brightness may not necessarily be sufficient because the coating material for the metal sheet surface is not selected from a viewpoint that the container-body part after being processed is to have an appearance with brightness.

An object of the present invention is to provide a resin coated metal sheet for using drawn and ironed cans which has excellent formability in the drawing and ironing processes under dry conditions and which is able to give an appearance with excellent brightness to the drawn and ironed cans. Another object of the present invention is to provide a drawn and ironed can which is obtained using the resin coated metal sheet for using drawn and ironed cans. Still another object of the present invention is to provide a method of manufacturing the drawn and ironed can.

[Means for solving problems]

As a result of intensive studies to achieve the above objects, the present inventors have found that the above objects can be achieved by forming, on a surface of a metal sheet to be a can outer surface, a resin layer having a storage elastic modulus of 500 MPa or less within a temperature range of 90-150°C and a degree of breaking elongation of 100% or more within the temperature range of 90-150°C, the resin layer containing thermoset polyester and phenol resin. The inventors have thus accomplished the present invention.

That is, according to an aspect of the present invention, there is provided a resin coated metal sheet for using drawn and ironed cans which is to be made into a can body by drawing and ironing. The resin coated metal sheet comprises a metal sheet coated with a resin layer. The resin layer is formed on a surface of the metal sheet to be a can outer surface. The resin coated metal sheet for using drawn and ironed cans is characterized in that the resin layer comprises a resin having a storage elastic modulus of 500 MPa or less within a temperature range of 90-150°C and a degree of breaking elongation of 100% or more within the temperature range of 90-150°C.

In the present invention, it is preferred that the resin layer has a thickness of 0.02-2 μm.

According to another aspect of the present invention, there is provided a drawn and ironed can obtained through a drawing process and an ironing process for the above resin coated metal sheet for using drawn and ironed cans.

According to a further aspect of the present invention, there is provided a method of manufacturing a drawn and ironed can. The method comprises steps of: forming a resin layer on a surface of a metal sheet to be a can outer surface, the resin layer having a storage elastic modulus of 500 MPa or less within a temperature range of 90-150°C and a degree of breaking elongation of 100% or more within the temperature range of 90-150°C; and processing the metal sheet formed thereon with the resin layer into a can body by performing a drawing process and an ironing process so that a body part of the can body after the processes has a specular reflectance of 15% or more.

[Effect of Invention]

According to the present invention, there can be provided a resin coated metal sheet for using drawn and ironed cans which has excellent formability in the drawing and ironing processes under dry conditions and which is able to give an appearance with excellent brightness to the drawn and ironed cans, and there can also be provided a drawn and ironed can which is obtained using the resin coated metal sheet for using drawn and ironed cans and which has an appearance with excellent brightness.

[Brief Description of Drawings]

FIG. 1 is a graph illustrating a relationship between a temperature and a storage elastic modulus of resin used in each of examples and a comparative example.

FIG. 2 is a graph illustrating a relationship between a temperature and a degree of breaking elongation of resin used in each of the examples and the comparative example.

[Mode(s) for Carrying out the Invention]

The resin coated metal sheet 1 for afterward using drawn and ironed cans according to the present invention is to be made into a can body by drawing and ironing, and is characterized in that the resin coated metal sheet 1 comprises a metal sheet coated with a resin layer formed on a surface of the metal sheet 10 to be a can outer surface and the resin layer 20 having a storage elastic modulus of 500 MPa or less within a temperature range of 90-150°C and a degree of breaking elongation of 100% or more within the temperature range of 90-150°C.

<Metal sheet>

The metal sheet as a base substance is not particularly limited, and a variety of metal sheets can be used, but an aluminum sheet may ordinarily be used because it is preferred for use in metal-can containers for beverage. An aluminum sheet to be used may have, but is not particularly limited to having, a sheet thickness within a range of 0.1-0.5 mm from a viewpoint that the drawing and ironing processes can be appropriately performed.

The surface of an aluminum sheet to be the can outer surface may have an arithmetic average surface roughness Ra preferably of 0.6 μm or less, more preferably of 0.5 μm or less, and further preferably of 0.4 μm or less, from a viewpoint of further improving the appearance with brightness of a drawn and ironed can obtained by performing the drawing and ironing processes. If the surface of an aluminum sheet to be the can outer surface has an unduly large arithmetic average surface roughness Ra, a part of the resin layer formed on the surface of the aluminum sheet to be the can outer surface, which part forms a valley portion, is entangled during the ironing process thereby to reduce the surface smoothness of the outer surface of the drawn and ironed can to be obtained. This may result in an appearance with poor brightness.

The aluminum sheet to be used may have a surface or surfaces to which chromate treatment, phosphoric acid chromate treatment and/or zirconium treatment are applied.

<Outer surface resin layer>

The resin coated metal sheet for using drawn and ironed cans according to the present invention comprises a resin layer (referred hereinafter to as an "outer surface resin layer") on the surface of the metal sheet to be the can outer surface.

The present invention has a feature that the outer surface resin layer formed on the surface of the metal sheet to be the can outer surface is formed of a resin that has a storage elastic modulus of 500 MPa or less within a temperature range of 90-150°C and a degree of breaking elongation of 100% or more within the temperature range of 90-150°C. The present invention is mostly characterized in this feature. In particular, according to the present invention, forming the outer surface resin layer of a resin to have the above specific values of the storage elastic modulus and the degree of breaking elongation within the temperature range of 90-150°C, makes it possible to improve the appearance with brightness of the drawn and ironed can to be obtained while enhancing the formability in the drawing and ironing processes under dry conditions. The reasons for this are not necessarily clear, but it appears that this is because the coverage of the outer surface resin layer on the underlying base material increases thereby to prevent the occurrence of scratches, so that the diffuse reflection at the underlying base material is suppressed.

The resin that constitutes the outer surface resin layer may be sufficient if it has a storage elastic modulus of 500 MPa or less within the temperature range of 90-150°C, but the storage elastic modulus may more preferably be 450 MPa or less, and further preferably 400 MPa or less, within the above temperature range.

The storage elastic modulus of the resin that constitutes the outer surface resin layer can be measured, for example, through: preparing a resin film consisting only of the resin that constitutes the outer surface resin layer; and performing dynamic viscoelastic measurement for the prepared resin film within a temperature range including the temperature range of 90-150°C. Specifically, after the dynamic viscoelastic measurement is performed, the minimum value of the storage elastic modulus within the temperature range of 90-150°C may be obtained, and this minimum value can represent the storage elastic modulus within the temperature range of 90-150°C. That is, according to the present invention, the resin to be used to constitute the outer surface resin layer may be a resin of which the minimum value of the storage elastic modulus within the temperature range of 90-150°C is 500 MPa or less even if the resin has a storage elastic modulus of more than 500 MPa within a temperature range that falls within the temperature range of 90-150°C.

In addition, the resin that constitutes the outer surface resin layer may be sufficient if it has a degree of breaking elongation of 100% or more within the temperature range of 90-150°C, but the degree of breaking elongation may more preferably be 110% or more, and further preferably 120% or more, within the above temperature range.

The degree of breaking elongation of the resin that constitutes the outer surface resin layer can be measured, for example, through: preparing a resin film consisting only of the resin that constitutes the outer surface resin layer; and performing tensile test for the prepared resin film within a temperature range including the temperature range of 90-150°C in accordance with JIS K7127. Specifically, after the tensile test is performed, the maximum value of the degree of breaking elongation within the temperature range of 90-150°C may be obtained, and this maximum value can represent the degree of breaking elongation within the temperature range of 90-150°C. That is, according to the present invention, the resin to be used to constitute the outer surface resin layer may be a resin of which the maximum value of the degree of breaking elongation within the temperature range of 90-150°C is 100% or more even if the resin has a degree of breaking elongation of less than 100% within a temperature range that falls within the temperature range of 90-150°C.

Specific examples of such a resin that constitutes the outer surface resin layer include, but are not particularly limited to, polyesters such as polyethylene terephthalate, polyethylene terephthalate/isophthalate, polytetramethylene terephthalate, polyethylene/tetramethylene terephthalate, polytetramethylene terephthalate/isophthalate, polytetramethylene/ethylene terephthalate, polyethylene/tetramethylene terephthalate/isophthalate, polyethylene/oxybenzoate and a blended material of these components; polycarbonates such as poly-p-xylylene glycol biscarbonate, poly-dioxydiphenyl-methane carbonate, poly-dioxydiphenol 2,2-propane carbonate and poly-dioxydiphenyl 1,1-ethane carbonate; polyamides such as poly-ω-aminocaproic acid, poly-ω-amino heptanoic acid, poly-ω-amino caprylic acid, poly-ω-amino pelargonic acid, poly-ω-amino decanoic acid, poly-ω-amino undecanoic acid, poly-ω-amino dodecanoic acid, poly-ω-amino tridecanoic acid, polyhexamethylene adipamide, polyhexamethylene sebacamide, polyhexamethylene dodecamide, polyhexamethylene tridecamide, polydecamethylene adipamide, polydecamethylene sebacamide, polydecamethylene dodecamide, polydecamethylene tridecamide, polydodecamethylene adipamide, polydodecamethylene sebacamide, polydodecamethylene dodecamide, polytridecamethylene adipamide, polytridecamethylene sebacamide, polytridecamethylene dodecamide, polydodecamethylene azeramide, polytridecamethylene azeramide and copolyamide thereof; and other resins such as polyamide-imide resin, acrylic resin, urethane acrylate resin, epoxy resin and phenol resin. In the present invention, the storage elastic modulus and the degree of breaking elongation within the temperature range of 90-150°C may be appropriately controlled to the above specific values by: modifying the above resin or resins as necessary; adjusting the molecule weight and/or the glass-transition temperature (Tg); and/or adjusting the ratio of crosslinking points in the case of thermoset resin or resins. For example, there are tendencies that a lower glass-transition temperature (Tg) causes a lower storage elastic modulus and a higher degree of breaking elongation within the temperature range of 90-150°C and that, in the case of thermoset resin, a lower ratio of crosslinking points causes a lower storage elastic modulus and a higher degree of breaking elongation within the temperature range of 90-150°C. There is also a tendency that a longer carbon chain in the repeating unit in a molecule causes a lower storage elastic modulus and a higher degree of breaking elongation within the temperature range of 90-150°C. In the present invention, therefore, the resin that constitutes the outer surface resin layer can be selected on the basis of such tendencies.

Among the above-described resins, polyesters are preferred as the resin that constitutes the outer surface resin layer. In particular, thermoplastic polyesters such as urethane-modified polyester and thermoset polyesters such as epoxy resin are preferred. When thermoset polyesters are used, it is preferred to use phenol resin in combination therewith.

Two or more kinds of resins may be blended to be used as the resin that constitutes the outer surface resin layer. In this case, control may be performed so that the resin film obtained by blending two or more kinds of resins has the above specific values of the storage elastic modulus and the degree of breaking elongation within the temperature range of 90-150°C.

The thickness of the outer surface resin layer is not particularly limited, but may preferably be 0.02-2 $\mu$m, more preferably 0.05-1.8 $\mu$m, and further preferably 0.1-1.5 $\mu$m. If the thickness of the outer surface resin layer is unduly thin, the occurrence of parts not covered with resin, i.e., metal-exposed parts, may be significant when the drawing and ironing processes are performed, so that a large amount of metal powder may be generated due to rubbing between the metal-exposed parts and dies during the processes. Owing to the effect of the generated metal powder, damage of a resin layer formed in a can may be serious. The resin layer formed in a can will be described later. As a result, the storage ability for the contents stored in the can may possibly deteriorate. If, on the other hand, the thickness of the outer surface resin layer is unduly thick, the gloss possessed by the metal sheet as the underlying metal may be interrupted, which will lead to an appearance with poor brightness.

In the present invention, the method of forming the outer surface resin layer is not particularly limited. From viewpoints that the interfacial adhesion between the metal sheet and the outer surface resin layer can be enhanced and that the outer surface resin layer can be uniformly and easily formed, it is preferred to employ a method in which a coating material that contains resin is used to be applied to the metal sheet and dried if necessary. It is therefore preferred to employ, as the resin that forms the outer surface resin layer, a resin that can be a coating material by being molten or by being dissolved in an organic solvent and can form a coated film. As the method of applying the coating material, there can be used a conventionally-known method utilizing a roll coater such as gravure coater or utilizing a spray coater, for example.

<Inner surface resin layer>

The resin coated metal sheet for using drawn and ironed cans according to the present invention may be configured to further comprise another resin layer (referred hereinafter to as an "inner surface resin layer") on the opposite surface to the surface on which the outer surface resin layer is formed, i.e., on the surface of the metal sheet to be the can inner surface. In particular, by forming such an inner surface resin layer, it is possible to improve the corrosion resistance at the inner surface of the drawn and ironed can to be obtained. This allows the store stability for the contents to be enhanced.

The resin that constitutes the inner surface resin layer is not particularly limited, and may be appropriately selected depending on the intended use of the drawn and ironed can to be obtained (such as the type of the contents).

The thickness of the inner surface resin layer is not particularly limited, but may preferably be 1-40 $\mu$m, and more preferably 5-30 $\mu$m. The thickness of the inner surface resin layer of less than 1 $\mu$m may make it difficult to obtain the improvement effect in the store stability for the contents, while on the other hand the thickness of more than 40 $\mu$m may be economically undesirable because the improvement effect in the store stability for the contents will be saturated at such a thickness.

<Method of manufacturing resin coated metal sheet for using drawn and ironed cans>

The resin coated metal sheet for using drawn and ironed cans according to the present invention can be manufactured by forming the outer surface resin layer on the surface of the metal sheet to be the outer surface and, if necessary, further forming the inner surface resin layer on the surface of the metal sheet to be the inner surface.

As described above, the outer surface resin layer can be formed by using a coating material that contains a resin, which is to form the outer surface resin layer, to apply the coating material to the metal sheet and, if necessary, drying the coating material. The inner surface resin layer may be formed by using a coating material that contains a resin, which is to form the inner surface resin layer, as with the outer surface resin layer, or may also be formed by a method of laminating a resin film which is to form the inner surface resin layer.

In view of improving the interfacial adhesion, corrosion resistance and other appropriate properties, a surface treatment layer may be preliminarily formed on the metal sheet as the base material. Examples of such surface treatment include: a method of forming a film of hydrated chromium oxide on a metal sheet using immersion treatment or electrolytic treatment in aqueous solution of dichromate salt; a method of forming a two-layer film comprising chromium metal and hydrated chromium oxide on a metal sheet using electrolytic treatment in aqueous solution of chromic acid anhydride; a method of forming a thin film of organic resin, such as polyacrylic acid and epoxy resin, on a metal sheet; and a method of performing silane coupling treatment on the metal sheet. Thus, such surface treatment can be performed using a conventionally-known method.

<Method of manufacturing drawn and ironed can>

The drawn and ironed can according to the present invention can be manufactured through a drawing process and an ironing process for the above resin coated metal sheet for using drawn and ironed cans according to the present invention.

Specific method of manufacturing a drawn and ironed can according to the present invention may be as follows. First, a blank having a predetermined shape is punched out of the resin coated metal sheet for using drawn and ironed cans according to the present invention, and the drawing process is performed such that the punched blank is drawn into a cup-like body using a single-stage die or multistage dies for drawing. In the subsequent ironing process, a single-stage die or multistage dies for ironing may be used. The ironing process is performed such that the body part of the cup-like body obtained in the drawing process is forcibly pressed into a clearance space between a die and a punch, which is set smaller than the thickness of the body part of the cup-like body obtained in the drawing process, to increase the body height while reducing the thickness of the body part. In such a manner, a drawn and ironed can (DI can) can be formed to have a relatively small diameter of the can and a long height and a thin thickness of the can-body part.

The drawn and ironed can provided in such a manner is obtained by performing the drawing and ironing processes for the above-described resin coated metal sheet for using drawn and ironed cans according to the present invention. The resin coated metal sheet for using drawn and ironed cans according to the present invention includes the resin layer of which the storage elastic modulus and the degree of breaking elongation within the temperature range of 90-150°C are controlled to fall within the specific ranges, as described above, and can thereby have excellent formability. Therefore, not only when a liquid coolant is used, but also when the drawing and ironing are performed under a dried condition without using coolant, the drawn and ironed can can be formed with excellent formability. Moreover, the drawn and ironed can according to the present invention obtained in such a manner has an appearance with excellent brightness. Specifically, the body part of the drawn and ironed can according to the present invention may preferably have a specular reflectance of 15% or more, more preferably 25% or more, and further preferably 25% or more, and is thus excellent in its appearance with brightness. In particular, according to the present invention, it is preferred to perform the drawing and ironing processes so that the specular reflectance of the body part of the obtained drawn and ironed can falls within such a range.

[Examples]

The present invention will hereinafter be described more specifically with reference to examples, but the present invention is not limited to these examples.

Each evaluation was performed in accordance with the method as below.

<Storage elastic modulus of resin for forming outer surface resin layer>

The storage elastic modulus of the resin for forming the outer surface resin layer used in each of examples and a comparative example was measured in accordance with the method as below.

First, each coating material was obtained by dissolution of the resin for forming the outer surface resin layer used in each of examples and a comparative example. The coating material was applied onto aluminum foil so that the thickness after drying would be 10 μm, and drying/curing was performed in accordance with the drying condition and the curing condition depending on the type of each resin thereby to form a resin film on the aluminum foil. The resin film formed with the aluminum foil was immersed in hydrochloric acid aqueous solution to dissolve the aluminum foil, and only the resin film was taken out therefrom. The obtained resin film was cut into a size of a width of 5 mm, and a sample for measurement was thus obtained.

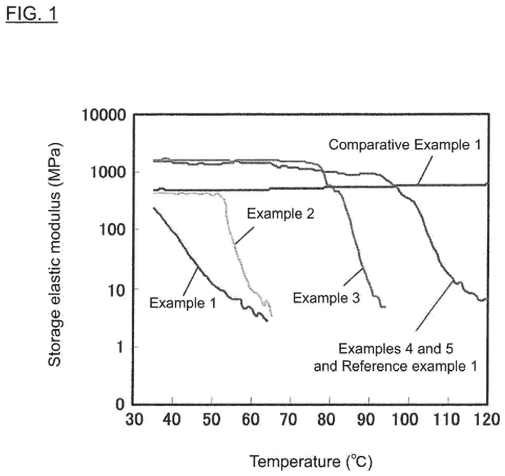

Then, a dynamic viscoelastometer ("RHEOVIBRON DDV-01FP" available from ORIENTEC Co., LTD.) was used to perform dynamic viscoelastic measurement for the obtained sample for measurement within a temperature range of 35-250°C under conditions of frequency: 2.5 Hz, displacement amplitude: 8μm, static load: 2 gf, rate of temperature rise: 2°C/min, and distance between marked lines: 20 mm, and the elastic modules within the temperature range of 35-250°C was measured. Thereafter, from the obtained results, the minimum value of the storage elastic modulus within a temperature range of 90-150°C was obtained, and this minimum value was employed to represent the storage elastic modulus within the temperature range of 90-150°C. FIG. 1 is a graph illustrating a relationship between the temperature and the storage elastic modulus of resin used in each of Examples 1-5, Reference Example 1, and Comparative Example 1.

As can be confirmed from FIG. 1, resins used in Examples 1 and 2 exhibit values less than 10 MPa, which are around the lower detection limit value, at temperatures lower than 90°C, and the storage elastic modulus was not able to be measured within the temperature range of 90-150°C. However, since the storage elastic modulus tends to decrease as the temperature increases in general, the storage elastic modulus within the temperature range of 90-150°C can be expected to be less than 10 MPa. It can therefore be said that the resins used in Examples 1 and 2 each have a storage elastic modulus of less than 10 MPa within the temperature range of 90-150°C.

<Degree of breaking elongation of resin for forming outer surface resin layer>

The degree of breaking elongation of the resin for forming the outer surface resin layer used in each of the examples and the comparative example was measured in accordance with the method as below.

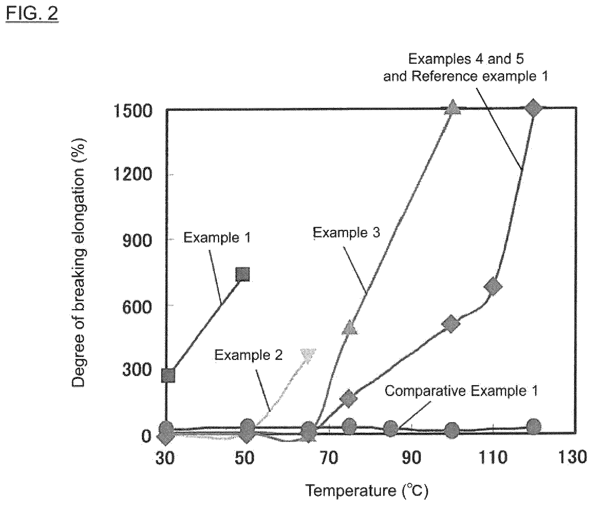

For each sample for measurement obtained in a similar manner to that in the above evaluation of the storage elastic modulus, tensile test was performed in accordance with JIS K7127 using a tensile tester ("TENSILON RTC-1210A" available from ORIENTEC Co., LTD.) under conditions of testing rate: 200 mm/min, distance between marked lines: 20 mm, and measurement temperatures: 50°C, 75°C, 100°C and 120°C to measure the degree of breaking elongation at each measurement temperature. In the present examples, the degree of breaking elongation at the measurement temperature of 100°C was employed to represent the degree of breaking elongation within the temperature range of 90-150°C. FIG. 2 is a graph illustrating a relationship between the temperature and the degree of breaking elongation of resin used in each of Examples 1-5, Reference Example 1, and Comparative Example 1.

As can be confirmed from FIG. 2, the measurement results of resins used in Examples 3-5, Reference Example 1 and Comparative Example 1 show that, even when the degree of breaking elongation at the measurement temperature of 100°C is employed to represent the degree of breaking elongation within the temperature range of 90-150°C as substituted for the maximum value of the degree of breaking elongation within the temperature range of 90-150°C, tendency of the degree of breaking elongation is substantially the same. In the present examples, therefore, the degree of breaking elongation at the measurement temperature of 100°C is used for evaluation.

Also as can be confirmed from FIG. 2, the resins used in Examples 1 and 2 each have a degree of breaking elongation over 300% at temperatures lower than 90°C. Since the degree of breaking elongation tends to increase as the temperature increases in general, it has been determined that measurement is unnecessary at further higher temperatures. The degree of breaking elongation within the temperature range of 90-150°C is thus determined to be over 300%.

<Formability>

A drawing process and an ironing process were performed in each of the examples and the comparative example to form a sheet into a drawn and ironed can. When the drawing and ironing were able to be performed smoothly, evaluation was "Good," whereas when a break occurred at the body part and the drawing and ironing were not able to be performed, evaluation was "NG."

<Specular reflectance at body part>

A part of the body part was cut away in the circumferential direction from the drawn and ironed can obtained in each of the examples and the comparative example. The width of the cut part was 20 mm, which was defined between a position of 60 mm in the height direction from the bottom of the can and a position of 80 mm. The cut part of the body part with the width of 20 mm was then cut in the can height direction to be divided equally into eight measurement samples. For the obtained eight measurement samples, total reflectance and diffuse reflectance were measured at the central portion of each measurement sample using a spectrophotometer (type "CM-3500" available from KONICA MINOLTA, INC), and the specular reflectance was calculated in accordance with the equation below. An average value of the specular reflectance of the obtained measurement samples (eight samples) was rounded to an integer, which was used as the specular reflectance at the body part.

$$\text{Specular reflectance (\%)} = \text{Total reflectance (\%)} - \text{Diffuse reflectance (\%)}$$

In the present examples, the specular reflectance at the body part was determined Good, if it was 15% or more.

<Example 1>

An aluminum sheet treated with phosphoric acid chromate treatment (16 mg/cm$^2$ as Cr amount) on both surfaces was prepared (sheet thickness: 0.28 mm, 3104 alloy material). The surface of the aluminum sheet, treated with phosphoric acid chromate treatment, to be the can outer surface had an arithmetic average surface roughness Ra of 0.35 μm. An inner surface resin layer was formed by: heating the aluminum sheet treated with phosphoric acid chromate treatment to a sheet temperature of 220°C; coating the surface to be the can inner surface with an unstretched isophthalic acid/terephthalic acid copolymerized polyester film (available from Toyo Kohan Co., Ltd., melting point: 210°C, film thickness: 12 μm); and cooling them. Subsequently, an outer surface resin layer was formed by: applying 2-butanone solution of urethane-modified thermoplastic polyester resin (product name "VYLON UR·UR-2300," available from TOYOBO CO., LTD., glass-transition temperature (Tg): 18°C) to the surface to be the can outer surface, of the aluminum sheet formed thereon with the inner surface resin layer, so that the thickness after drying would be 0.25 μm; and thereafter drying it under 150°C for 30 seconds. The resin coated aluminum sheet was thus obtained.

Thereafter, 50 mg/m$^2$ of glamour wax was applied to both surfaces of the obtained resin coated aluminum sheet, and forming through drawing and ironing was then performed in a dry atmosphere under the conditions below so that the surface coated with the unstretched isophthalic acid/terephthalic acid copolymerized polyester film would be the can inner surface. The drawn and ironed can was thus obtained. Further, evaluations of the formability and the specular reflectance at the body part were performed in accordance with the above methods. Results are listed in Table 1.

- Forming temperature: Temperature of punch immediately before forming: 45°C
- Die temperature: 40°C
- Blank diameter: 142mm
- Drawing condition: 1st drawing ratio: 1.56, 2nd drawing ratio: 1.38
- Diameter of ironing punch: 66 mm
- Total ironing ratio: 63% (central portion of sidewall)
- Can manufacturing rate: 200 cpm

<Example 2>

A resin coated aluminum sheet and a drawn and ironed can were obtained and evaluated as with Example 1 except for using 2-butanone solution of thermoplastic unsaturated copolymerized polyester resin (product name "Elitel UE3240," available from UNITIKA LTD., glass-transition temperature (Tg): 40°C) as the resin material for forming the outer surface resin layer on the surface to be the can outer surface. Results are listed in Table 1.

<Example 3>

A resin coated aluminum sheet and a drawn and ironed can were obtained and evaluated as with Example 1 except for using 2-butanone solution of thermoplastic polyester resin (product name "VYLON·GK-640," available from TOYOBO CO., LTD., glass-transition temperature (Tg): 79°C) as the resin material for forming the outer surface resin layer on the surface to be the can outer surface. Results are listed in Table 1.

<Example 4>

A resin coated aluminum sheet and a drawn and ironed can were obtained and evaluated as with Example 1 except for using 2-butanone solution of urethane-modified thermoplastic polyester resin (product name "VYLON·UR·UR-4800," available from TOYOBO CO., LTD., glass-transition temperature (Tg): 106°C) as the resin material for forming the outer surface resin layer on the surface to be the can outer surface. Results are listed in Table 1.

<Example 5>

A resin coated aluminum sheet and a drawn and ironed can were obtained and evaluated as with Example 4 except for changing the thickness of the outer surface resin layer formed on the surface to be the can outer surface to 2 μm. Results are listed in Table 1.

<Example 6>

A resin coated aluminum sheet and a drawn and ironed can were obtained and evaluated as with Example 1 except for: using 2-butanone solution of a mixture of thermoset polyester resin and phenol as the resin material for forming the outer surface resin layer on the surface to be the can outer surface; drying it under a condition of 200°C and 10 minutes; and performing heat curing reaction. Results are listed in Table 1.

<Reference Example 1>

A resin coated aluminum sheet and a drawn and ironed can were obtained and evaluated as with Example 4 except for changing the thickness of the outer surface resin layer formed on the surface to be the can outer surface to 3 $\mu$m. Results are listed in Table 1.

<Comparative Example 1>

A resin coated aluminum sheet and a drawn and ironed can were obtained and evaluated as with Example 1 except for using N-methyl-2-pyrrolidone solution of thermoplastic polyamide-imide resin (product name "VYLOMAX·HR-11NN," available from TOYOBO CO., LTD., glass-transition temperature (Tg): 300°C) as the resin material for forming the outer surface resin layer on the surface to be the can outer surface. Results are listed in Table 1.

[Table 1]

| | Arithmetic average surface roughness Ra ($\mu$m) | Outer surface resin layer | | | | Forma-bility | Specular reflectance at body part (%) |
|---|---|---|---|---|---|---|---|
| | | Type of resin | Film thickness ($\mu$m) | Storage elastic modulus (MPa) | Degree of breaking elongation (%) | | |
| Example 1 | 0,35 | Urethane-modified thermoplastic polyester (Tg=18°C) | 0,25 | <10 | >300 | Good | 24 |
| Example 2 | 0,35 | Thermoplastic unsaturated copolymerized polyester (Tg=40°C) | 0,25 | <10 | >300 | Good | 32 |
| Example 3 | 0,35 | Thermoplastic polyester (Tg=79°C) | 0,25 | 5 | >300 | Good | 38 |
| Example 4 | 0,35 | Urethane-modified thermoplastic polyester (Tg=106°C) | 0,25 | 2 | 504 | Good | 43 |
| Example 5 | 0,35 | Urethane-modified thermoplastic polyester (Tg=106°C) | 2 | 2 | 504 | Good | 17 |
| Example 6 | 0,35 | Thermoset polyester/phenol | 0,25 | 2 | 154 | Good | 24 |
| Reference Example 1 | 0,35 | Urethane-modified thermoplastic polyester (Tg=106°C) | 3 | 2 | 504 | Good | 13 |
| Comparative Example 1 | 0,35 | Thermoplastic polyamide-imide (Tg=300°C) | 0,25 | 553 | 16 | NG | - |

In Table 1, "Storage elastic modulus" and "Degree of breaking elongation" mean the storage elastic modulus within the temperature range of 90-150°C and the degree of breaking elongation within the temperature range of 90-150°C, respectively. Examples 1-5 are outside the scope of claims and are considered as reference examples.

Table 1 shows that all of Examples 1-6, in which the outer surface resin layer is formed using resin having a storage elastic modulus of 500 MPa or less within the temperature range of 90-150°C and a degree of breaking elongation of 100% or more within the temperature range of 90-150°C, are excellent in the formability in the drawing and ironing processes. Moreover, the obtained drawn and ironed cans are excellent in the reflectance at the body part.

With regard to Reference Example 1 in which the thickness of the outer surface resin layer is 3 $\mu$m, the results are such that the formability in the drawing and ironing processes is excellent, but the reflectance at the body part is somewhat poor.

With regard to Comparative Example 1 in which the outer surface resin layer is formed using resin that has a degree of breaking elongation of less than 100% within the temperature range of 90-150°C, the formability in the drawing and ironing processes is poor, and a break occurs at the body part so that the forming cannot be performed.

## Claims

1. A resin coated metal sheet for using drawn and ironed cans which is to be made into a can body by drawing and ironing, comprising:

   a metal sheet and
   a resin layer which is formed on a surface of the metal sheet to be a can outer surface, wherein
   the resin layer has a storage elastic modulus of 500 MPa or less within a temperature range of 90-150°C and a degree of breaking elongation of 100% or more within the temperature range of 90-150°C, and
   the resin layer contains thermoset polyester and phenol resin.

2. The resin coated metal sheet according to claim 1, wherein the resin layer has a thickness of 0.02-2 $\mu$m.

3. The resin coated metal sheet according to claim 1 or 2, wherein the metal sheet comprises an aluminum sheet.

4. A drawn and ironed can obtained through a drawing process and an ironing process for the resin coated metal sheet according to any one of claims 1 to 3.

5. A method of manufacturing a drawn and ironed can comprising:

   forming a resin layer on a surface of a metal sheet to be a can outer surface, the resin layer having a storage elastic modulus of 500 MPa or less within a temperature range of 90-150°C and a degree of breaking elongation of 100% or more within the temperature range of 90-150°C, the resin layer containing thermoset polyester and phenol resin; and
   processing the metal sheet formed thereon with the resin layer into a can body by performing a drawing process and an ironing process so that a body part of the can body after the processes has a specular reflectance of 15% or more.

6. The method of manufacturing a drawn and ironed can according to claim 5, wherein the resin layer has a thickness of 0.02-2 $\mu$m.

7. The method of manufacturing a drawn and ironed can according to claim 5 or 6, wherein the metal sheet comprises an aluminum sheet.

## Patentansprüche

1. Harzbeschichtetes Metallblech für tiefgezogene und glattgezogene Dosen, das durch Tiefziehen und Glattziehen in einen Dosenkörper umzuformen ist, mit:

   einem Metallblech und
   einer Harzschicht, die auf einer Oberfläche des Metallbleches gebildet ist, die eine äußere Oberfläche der Dose werden soll, wobei

die Harzschicht ein elastisches Speichermodul von 500 MPa oder weniger in einem Temperaturbereich von 90 bis 150°C und eine Bruchdehnung von 100% oder mehr innerhalb des Temperaturbereiches von 90 bis 150°C aufweist und

die Harzschicht duroplastisches Polyester und Phenolharz enthält.

2. Harzbeschichtetes Metallblech nach Anspruch 1, bei dem die Harzschicht eine Dicke von 0,02 bis 2 $\mu$m hat.

3. Harzbeschichtetes Metallblech nach Anspruch 1 oder 2, bei dem das Metallblech ein Aluminiumblech aufweist.

4. Tiefgezogene und glattgezogene Dose, erhalten durch einen Ziehprozess und einen Glattziehprozess aus dem harzbeschichteten Metallblech nach einem der Ansprüche 1 bis 3.

5. Verfahren zur Herstellung einer tiefgezogenen und glattgezogenen Dose, mit:

ausbilden einer Harzschicht auf einer Oberfläche eines Metallbleches, das eine äußere Oberfläche der Dose werden soll, wobei die Harzschicht ein elastisches Speichermodul von 500 MPa oder weniger in einem Temperaturbereich von 90 bis 150°C und eine Bruchdehnung von 100% oder mehr in dem Temperaturbereich von 90 bis 150°C hat, wobei die Harzschicht duroplastisches Polyester und Phenolharz enthält; und

umformen des Metallblechs mit der darauf gebildeten Harzschicht in einen Dosenkörper durch Ausführung eines Tiefziehprozesses und eines Glattziehprozesses, so dass ein Körperteil des Dosenkörpers nach den Bearbeitungsschritten eine gerichtete Reflektivität von 15% oder mehr hat.

6. Verfahren zur Herstellung einer tiefgezogenen und glattgezogenen Dose nach Anspruch 5, bei dem die Harzschicht eine Dicke von 0,02 bis 2 $\mu$m hat.

7. Verfahren zur Herstellung einer tiefgezogenen und glattgezogenen Dose nach Anspruch 5 oder 6, bei dem das Metallblech ein Aluminiumblech aufweist.

**Revendications**

1. Plaque métallique revêtue de résine destinée à être utilisée pour des boîtes de conserve embouties et étirées et qui doit être fabriquée en un corps de boîte de conserve par emboutissage et étirage, comprenant :

une plaque métallique, et
une couche de résine qui est formée sur une surface de la plaque métallique destinée à être une surface extérieure de boîte de conserve,
dans laquelle
la couche de résine possède un module élastique de stockage de 500 MPa ou moins sur une plage de températures de 90 à 150°C et un degré d'allongement à la rupture de 100% ou plus sur la plage de températures de 90 à 150°C, et
la couche de résine contient un polyester thermodurcissable et une résine de phénol.

2. Plaque métallique revêtue de résine selon la revendication 1, dans laquelle la couche de résine présente une épaisseur de 0,02 à 2 $\mu$m.

3. Plaque métallique revêtue de résine selon la revendication 1 ou 2, dans laquelle la plaque métallique comprend une plaque d'aluminium.

4. Boîte de conserve emboutie et étirée obtenue à l'aide d'un processus d'emboutissage et d'un processus d'étirage destinés à la plaque métallique revêtue de résine selon l'une quelconque des revendications 1 à 3.

5. Procédé de fabrication d'une boîte de conserve emboutie et étirée comprenant :

la formation d'une couche de résine sur une surface d'une plaque métallique destinée à être une surface extérieure de boîte de conserve, la couche de résine ayant un module élastique de stockage de 500 MPa ou moins sur une plage de températures de 90 à 150°C et un degré d'allongement à la rupture de 100% ou plus sur la plage de températures de 90 à 150°C, la couche de résine contenant un polyester thermodurcissable et

EP 2 915 759 B1

une résine de phénol, et
le traitement de la plaque métallique formée dessus avec la couche de résine en un corps de boîte de conserve en exécutant un processus d'emboutissage et un processus d'étirage de sorte qu'une partie de corps du corps de boîte de conserve après les processus présente une réflectance spéculaire de 15% ou plus.

6. Procédé de fabrication d'une boîte de conserve emboutie et étirée selon la revendication 5, dans lequel la couche de résine présente une épaisseur de 0,02 à 2 µm.

7. Procédé de fabrication d'une boîte de conserve emboutie et étirée selon la revendication 5 ou 6, dans lequel la plaque métallique comprend une plaque d'aluminium.

FIG. 1

FIG. 2

**EP 2 915 759 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003034322 A